# EUROPÄISCHE PATENTSCHRIFT

(11) **EP 3 812 953 B1**
(45) Veröffentlichungstag und Bekanntmachung des Hinweises auf die Patenterteilung: **29.09.2021**
(21) Anmeldenummer: 19204602.7
(22) Anmeldetag: 22.10.2019
(51) Int. Cl.: G06K 7/10, G06K 7/14

(54) **CODELESER UND VERFAHREN ZUM LESEN VON OPTISCHEN CODES**
CODE READER AND METHOD FOR READING OPTICAL CODES
LECTEUR DE CODES ET PROCÉDÉ DE LECTURE DES CODES OPTIQUES

(43) Veröffentlichungstag der Anmeldung: 28.04.2021
(73) Patentinhaber: SICK AG, 79183 Waldkirch (DE)
(72) Erfinder: Müller, Dr. Romain, 79252 Stegen (DE); Strohmeier, Dr. Dirk, 79312 Emmendingen (DE); Schüler, Pascal, 79331 Teningen (DE); Hampf, Marcel, 77955 Ettenheim (DE)

(56) Entgegenhaltungen:
- EP-A1- 1 645 839
- EP-A1- 2 341 461
- DE-A1-102018 105 301
- DE-A1-102018 105 301
- DE-T2- 69 801 422
- US-A1- 2009 200 380

## Beschreibung

Die Erfindung betrifft einen Codeleser und ein Verfahren zum Lesen von optischen Codes nach dem Oberbegriff von Anspruch 1 beziehungsweise 14.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Der Codeleser ist vielfach Teil eines komplexen Sensorsystems. Beispielsweise ist es bei Lesetunneln an Förderbändern üblich, die Geometrie der geförderten Objekte vorab mit einem gesonderten Laserscanner zu vermessen und daraus Fokusinformationen, Auslösezeitpunkte, Bildbereiche mit Objekten und dergleichen zu bestimmen. In der DE 10 2018 105 301 A1 wird ein Abstandssensor in eine Kamera integriert.

Eine der wichtigsten Kenngrößen eines Codelesesystems ist die Leserate, da nicht gelesene Codes zu manuellen Nachbearbeitungsschritten oder sogar Zuordnungsfehlern führen. Nun gibt es diverse Ursachen, warum das Lesen eines Codes scheitert. Bei flachen Objekten und dementsprechend großer Objektdistanz zum Codeleser ist die Beleuchtung nicht mehr ausreichend und die Codekontraste werden geringer. Die Modulgröße, d.h. die Anzahl Pixel pro Codemodul, nimmt ab und das Rauschen zu. Umgekehrt wird bei hohen Objekten und dementsprechend kleiner Objektdistanz das Bild tendenziell überbelichtet und kontrastarm, mit einem Effekt ähnlich einem Unterdruck, also einem zu schwach gedruckten Code. Gerade bei Fixfokussystemen werden je nach Tiefenschärfenbereich zumindest leicht unscharfe Bilder aufgenommen.

Als weiteres Beispiel kann es zu viele Störstrukturen geben, etwa die Holzstruktur eines Schalensorters. Der Decoder muss sensibel parametriert werden, um auch Codes auf flachen Objekten zu lesen. Das hat aber die Nebenwirkung, dass nun auch die Störstrukturen als potentielle Codebereiche erkannt werden und darauf Leseversuche unternommen werden, und dafür geht Rechenkapazität verloren.

Herkömmlich werden die Decoderalgorithmen und die Vorverarbeitungen des Bildes für eine bestimmte Anwendungssituation ausgewählt und parametriert. Das ist zunächst ein manueller Vorgang. Bekannt sind darüber hinaus ein Autosetup und eine Anpassung im Betrieb. Ziel ist, den Suchraum der Decoderalgorithmen zu begrenzen und dabei die Leserate mit möglichst geringen Decodierzeiten zu optimieren. Das Autosetup versucht automatisch vor dem eigentlichen Betrieb einen guten Parametersatz zu ermitteln. Die dynamische Anpassung beschränkt sich darauf, diesen Parametersatz leicht zu adaptieren, um schleichende Veränderungen und Driften zu kompensieren.

Somit wird durch ein Autosetup nur einmalig und statisch ein Suchraum für die Decoderalgorithmen festgelegt. Die Anpassung ist nur für langsamere Veränderungen der Lesebedingungen geeignet. In der typischen Lesesituation an einem Förderband beispielsweise ändern sich aber die Lesebedingungen hochdynamisch allein durch die verschiedenen Objekthöhen. Ein Autosetup kann nicht für alle Objekthöhen optimal sein, sondern muss einen guten Kompromiss finden. Die Anpassung wiederum ist für die schnellen Wechsel der Objekthöhen nicht gedacht und mit ihren langsamen, eher geringfügigen Parameteranpassungen viel zu träge.

Grundsätzlich ist es natürlich vorstellbar, die Bilddaten jeweils versuchsweise mit verschiedensten Parametereinstellungen und Algorithmen zu bearbeiten. Das ist aber in dem großen Parameterraum und mit den zahlreichen möglichen Bildverarbeitungsschritten praktisch nicht zu leisten.

Aus der EP 2 341 461 A1 ist ein adaptives Multisensor-Handgerät bekannt, mit dem Codes gelesen werden können. Ein weiteres Handgerät zum Codelesen wird in US 2009/0200380 A1 beschrieben. Die EP 1 645 839 A1 befasst sich mit der Überwachung von bewegten Objekten, die interessierende Bereiche unter Verwendung eines Entfernungsmessers auffindet.

Es ist daher Aufgabe der Erfindung, das Lesen von optischen Codes weiter zu verbessern.

Diese Aufgabe wird durch einen Codeleser und ein Verfahren zum Lesen von optischen Codes nach Anspruch 1 beziehungsweise Anspruch 14 gelöst. Der optische Code kann ein Barcode, aber auch ein zweidimensionaler Code nach einem der diversen bekannten Standards sein. Ein Bildsensor erfasst Bilddaten, sei es in jeweils einer Aufnahme oder durch Zusammensetzen von Bildern eines oder mehrerer Bildsensoren zu gleichen oder unterschiedlichen Zeiten, insbesondere sukzessive zeilenweise Erfassung. Um den Code zu lesen, werden die Bilddaten aufbereitet, und dann wird für die dabei gefundenen Codebereiche zumindest ein Decodierversuch unternommen. Ein interner oder externer Abstandssensor bestimmt zudem einen Distanzwert für den Abstand des Codes. Das kann auch ein Distanzwert pro Bild oder für das codetragende Objekt oder eine andere größere Fläche sein, muss also keineswegs exakt dem Codeabstand entsprechen. Alternativ werden mehrere Distanzwerte zu verschiedenen Bildbereichen gemessen.

Die Erfindung geht von dem Grundgedanken aus, eine Anpassung in Abhängigkeit von dem Distanzwert vorzunehmen. Damit wird das Decodierverfahren jeweils passend zum Codeabstand optimiert. Die Anpassung kann eine dynamische Autoparametrierung sein, also eine Suchraumanpassung, die Parameter des Decodierverfahrens entsprechend dem Distanzwert setzt. Alternativ oder zusätzlich werden bestimmte Schritte der Vorverarbeitung der Bilddaten oder des Decodierverfahrens, die hier als Zusatzalgorithmen bezeichnet sind, in Abhängigkeit vom Distanzwert einbezogen und daher je nach Codeabstand durchgeführt oder nicht durchgeführt.

Die Erfindung hat den Vorteil, dass das Decodierverfahren wesentlich effizienter ablaufen kann und größere Chancen besitzt, den Code zu lesen. Es werden also die beiden zentralen Kenngrößen Leserate und Decodiergeschwindigkeit optimiert. Durch die abstandsangepasste Parametrierung ist der Suchraum auf einen erfolgversprechenden Bereich eingeschränkt, der nicht vorab festgelegt werden, sondern dynamisch gefunden wird. Manche Codebereiche, die herkömmlich als Codekandidaten gelten, können anhand des angepassten Parameterraums sofort verworfen werden, noch ehe aufwändige Decodierversuche unternommen werden. Beispielsweise kann ein Bereich schwachen Kontrasts durch das Zusatzkriterium kleiner Distanzwert direkt als Störkontrast verworfen werden. Durch die engeren Parametervorgaben kann womöglich auch schnell erkannt werden, dass es aussichtslos sein wird, einen Code zu lesen, so dass zwar an dieser Stelle die Leserate nicht verbessert werden kann, jedoch zumindest Rechenzeit gespart und eine aufwändige Decodierung gar nicht erst gestartet wird. Außerdem werden gerade die Zusatzalgorithmen eingesetzt, die das Lesen tatsächlich erleichtern oder erst ermöglichen.

Die erfindungsgemäß erzielten Verbesserungen des Decodierverfahrens erlauben vielfach, einen Codeleser ohne Fokusanpassung einzusetzen, wo bisher nur ein aufwändiges Autofokussystem eine hinreichende Leserate erzielen konnte. Dadurch ergibt sich ein erheblicher Kostenvorteil.

Der Abstandssensor ist vorzugsweise ein in den Codeleser integrierter optoelektronischer Abstandssensor insbesondere nach einem Lichtlaufzeitverfahren. Dadurch stehen Distanzwerte immer zur Verfügung, ohne die Notwendigkeit, den Codeleser in ein System mit einem Abstandssensor einzubinden. Alternativ ist aber auch denkbar, den Codeleser beispielsweise mit einem Laserscanner zu verbinden, der Abstandsprofile misst.

Der Parameter ist mindestens einer der folgenden: Modulgröße, Kontrast, Unschärfe der Kanten. Die Modulgröße, etwa als Anzahl Pixel je Modul, hilft dem Decodierverfahren, die einzelnen Codemodule zu identifizieren und zu unterscheiden. Der Kontrast wird beispielsweise als Unterschied zwischen den hellen und dunklen Codeelementen oder als Mittelwert der Helligkeit angegeben. Die Unschärfe der Kanten ist ein Maß dafür, wie breit etwa in Pixeln eine Kante zu erwarten ist. Kontrast und Unschärfe unterstützen das Decodierverfahren darin, die hellen und dunklen Codeelemente zu unterscheiden und die Lage der Kanten dazwischen zu finden.

Die Steuer- und Auswertungseinheit hält vorzugsweise eine Parametertabelle mit Distanzwerten und zugehörigen Parametern, die anhand von gemessenen Werten der Parameter bei erfolgreichem Lesen von Codes gebildet und/oder aktualisiert wird. Mittels der gespeicherten Parametertabelle können die einzustellenden Parameter anhand des Distanzwerts sehr einfach nachgeschlagen werden. Die Parametertabelle wird anhand von erfolgreichen Leseversuchen aufgestellt und vorzugsweise ständig aktualisiert, so dass sie auf die tatsächliche Anwendungssituation passt. Der Codeleser lernt so, Codes immer schneller und besser zu lesen. Die Distanzwerte der Parametertabelle können grob oder fein abgestuft sein, wobei für Distanzwerte, die sich in der Parametertabelle nicht finden, auch eine Interpolation oder Extrapolation von Parametern denkbar ist.

Die Steuer- und Auswertungseinheit ist bevorzugt dafür ausgebildet, zum Verbessern der Parametertabelle zu versuchen, einen Code mit verschiedenen Parametern zu lesen. Damit ist nicht das eigentliche Lesen von Codes gemeint. Vielmehr werden dann, wenn Rechenkapazitäten dafür verfügbar sind, mit anderen als den bisher als optimal angesehenen Parametern Leseversuche unternommen, und zwar wahlweise auf Codebereichen, die schon erfolgreich gelesen wurden (GoodRead) und solchen, bei denen dies bisher nicht gelungen ist (NoRead). Auf diese Weise können Lücken in der Parametertabelle gefüllt oder deren Einträge verbessert werden.

Der Zusatzalgorithmus ist mindestens einer der folgenden: Downsampling, Upsampling, Superresolution, lokale Kontrasterhöhung, Deblurring, Unterdruckkorrektur. Mit Down- und Upsampling wird die Bildauflösung verbessert oder, wo die originäre Bildauflösung etwa bei sehr nahem Code eigentlich gar nicht erforderlich ist, für ein schnelleres Codelesen künstlich verschlechtert. Superresolution bezeichnet eine algorithmische Subpixel-Auflösungsverbesserung aus mehreren Aufnahmen. Lokale Kontrasterhöhung versucht die Kanten aufzuschärfen, während Kontrastspreizung die Bilddaten über einen größeren Teil des verfügbaren Helligkeits- oder Grauwertebereichs reskaliert. Für ein Deblurring sind verschiedene Algorithmen bekannt, von denen Lucy-Richardson-Deconvolution beispielhaft genannt wird. Unterdruckkorrektur ist ein Algorithmus, um schwach gedruckte Codes besser lesbar zu machen, wobei ähnliche Effekte auch bei Überbelichtung auftreten. Die genannten Zusatzalgorithmen sind für sich bekannt und nicht Gegenstand der Erfindung. Sie können aber allein schon der Rechenkapazitäten halber nicht einfach allesamt angewandt werden. Außerdem würde das Leseergebnis dadurch auch nicht unbedingt verbessert, je nach Situation kann ein Zusatzalgorithmus das Gegenteil des Gewünschten bewirken. Es ergibt sich je nach Objektabstand eine besonders geeignete Kombination von Zusatzalgorithmen, und diese wird entsprechend dem Distanzwert angewandt.

Die Steuer- und Auswertungseinheit hält vorzugsweise eine Zusatzalgorithmustabelle mit Distanzwerten und zugehörigen Zusatzalgorithmen, die anhand von mit einem jeweiligen Zusatzalgorithmus gelesenen Codes gebildet und/oder aktualisiert wird. Für die Zusatzalgorithmustabelle gilt Entsprechendes wie für die Parametertabelle.

Die Steuer- und Auswertungseinheit ist bevorzugt dafür ausgebildet, zum Verbessern der Zusatzalgorithmustabelle verschiedene Kombinationen von Zusatzalgorithmen auszuprobieren, insbesondere in Codebereichen, in denen bisher kein Code gelesen werden konnte. Im Gegensatz zu der Parametertabelle kann die Zusatzalgorithmustabelle nicht einfach aus erfolgreichen Leseversuchen aufgefüllt werden. Die Parameter werden zumindest teilweise beim Lesen gemessen. Die Zusatzalgorithmen dagegen werden schon vor dem Leseversuch ausgewählt. Daher wird die Zusatzalgorithmustabelle vorzugsweise zunächst aus allgemeinen Erfahrungen vorbelegt. Dann werden Probeleseversuche mit zufälligen oder erfahrungsgemäß potentiell geeigneten Kombinationen durchgeführt. Bei Codebereichen, deren Code schon gelesen wurde (GoodRead), ist demnach bereits eine Kombination von Zusatzalgorithmen bekannt, die zum Erfolg führt. Dann kann durch Probeleseversuche die Kombination nur noch weiter optimiert werden, vor allem hinsichtlich der Lesegeschwindigkeit. In Coderegionen, in denen das Lesen bisher gescheitert ist (NoRead), ist die Suche lohnender, da durch Auffinden einer passenden Kombination von Zusatzalgorithmen die Leserate gesteigert wird.

Die Steuer- und Auswertungseinheit ist bevorzugt dafür ausgebildet, Zusatzalgorithmen in Phasen auszuprobieren, in denen keine neuen Codes gelesen werden. Während des eigentlichen Decodierens, beispielsweise während sich codetragende Objekte im Lesebereich des Codelesers befinden, sind üblicherweise die Rechenkapazitäten durch das eigentliche Decodieren ausgelastet. Probeleseversuche zur Verbesserung der Zusatzalgorithmustabelle finden daher vorzugsweise in Leerlaufphasen statt, etwa in den Zeitintervallen, bis das nächste Objekt in den Lesebereich gefördert wird. Solche Leerlaufzeiten können im Übrigen auch für die oben angesprochenen Leseversuche mit neuen, noch nicht in der Parametertabelle verzeichneten Parametersätze genutzt werden.

Die Steuer- und Auswertungseinheit weist bevorzugt einen Testdecoder zum Ausprobieren von Parametern und/oder Zusatzalgorithmen auf. Der Testdecoder läuft unabhängig vom eigentlichen Decodierverfahren und ist daher nicht zwingend auf Leerlaufzeiten angewiesen. Beispielsweise wird dazu ein eigener Prozessorkern oder Thread verwendet. Allerdings hat dies den Nachteil, dass doch wieder Rechenkapazitäten gebunden werden, die alternativ auch dem eigentlichen Decodierverfahren zugeschlagen werden könnten. Zumindest gibt es aber an den Testdecoder keine zeitlichen Vorgaben, so dass der Prozessorkern bei Bedarf, etwa wenn das eigentliche Decodierverfahren gerade besonders hohe Rechenkapazitäten benötigt, für andere Aufgaben freigegeben werden, beziehungsweise der Thread mit entsprechend geringer Priorität betrieben werden kann.

Die Steuer- und Auswertungseinheit ist bevorzugt dafür ausgebildet, Parameter und/oder Zusatzalgorithmus für das eigentliche Decodieren von Codebereichen auszuwählen. Dabei wird angenommen, dass die Bilddaten zunächst segmentiert werden, um Codebereiche aufzufinden. Die erfindungsgemäß in Abhängigkeit vom Distanzwert gesetzten Parameter beziehungsweise gewählten Zusatzalgorithmen beziehen sich nach dieser Ausführungsform auf die der Segmentierung nachgelagerten Schritte und betreffen nur die Codebereiche.

Die Steuer- und Auswertungseinheit ist bevorzugt dafür ausgebildet, Parameter und/oder Zusatzalgorithmus für eine Vorverarbeitung der Bilddaten unabhängig von Codebereichen auszuwählen. Dies betrifft nun die Bilddaten vor oder während der Segmentierung. Ein Zusatzalgorithmus beziehungsweise eine Kombination von Zusatzalgorithmen, die auf diese Weise angewandt wird, konnte vorzugsweise zuvor verifiziert werden, d.h. bei dem gemessenen Distanzwert konnten Codes nach Anwendung dieser Zusatzalgorithmen erfolgreich gelesen werden, möglicherweise auch durch den Testdecoder.

Die Vorverarbeitung ist bevorzugt in einem FPGA (Field-Programmable Gate Array) implementiert. Ein solcher Baustein ist sehr gut geeignet, relativ einfache und monotone Verarbeitungsschritte in hoher Geschwindigkeit auf großen Datenmengen auszuführen. Das eigentliche Decodierverfahren dagegen läuft vorzugsweise auf einem Mikroprozessor ab, der flexibler programmiert werden kann und von dem FPGA entlastet wird.

Die Vorverarbeitung umfasst bevorzugt ein Upsampling, ein Downsampling und/oder eine Kontrastspreizung, wobei insbesondere die Kontrastspreizung durch eine Auswahl eines höherwertigen oder niederwertigen Bitbereichs der Bilddaten je nach Distanzwert aufweist. Damit wird je nach Distanzwert durch Upsampling eine ausreichende Bildauflösung erzielt oder durch Downsampling die spätere Verarbeitungsgeschwindigkeit gesteigert. Womöglich kann sogar die Bildaufnahmefrequenz erhöht werden, da durch das Downsampling mehr Bilder in kürzerer Zeit verarbeitet werden. Kontrastspreizung nutzt das verfügbare Spektrum an Helligkeits- oder Grauwerten besser aus. Insbesondere ist denkbar, dass zunächst die Bilddaten mit größerer Bitbreite vorliegen, beispielsweise 12 Bit oder 16 Bit als für das eigentliche Decodierverfahren mit beispielsweise 8 Bit. In diesem Fall ist eine besonders einfache Kontrastspreizung möglich. Die höhere Bitbreite wird nicht auf die geringere Bitbreite heruntergerechnet. Stattdessen werden je nach Distanzwert höherwertige oder niederwertige Bits ausgeschnitten. Ein Bild mit größerem Distanzwert ist regelmäßig dunkler, so dass die höherwertigen Bits ohnehin kaum echte Bildinformation tragen. Das gilt spiegelbildlich für die niederwertigen Bits eines Bildes mit kleinem Distanzwert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines kamerabasierten Codelesers mit einem ortsaufgelösten optoelektronischen Abstandssensor;
- Fig. 2: eine dreidimensionale Ansicht einer beispielhaften Anwendung des Codelesers in Montage an einem Förderband;
- Fig. 3: eine beispielhafte Parametertabelle mit Distanzwerten und zugehörigen Parametern für das Decodierverfahren; und
- Fig. 4: eine beispielhafte Zusatzalgorithmustabelle mit Distanzwerten und zugehörigen anzuwendenden Zusatzalgorithmen.

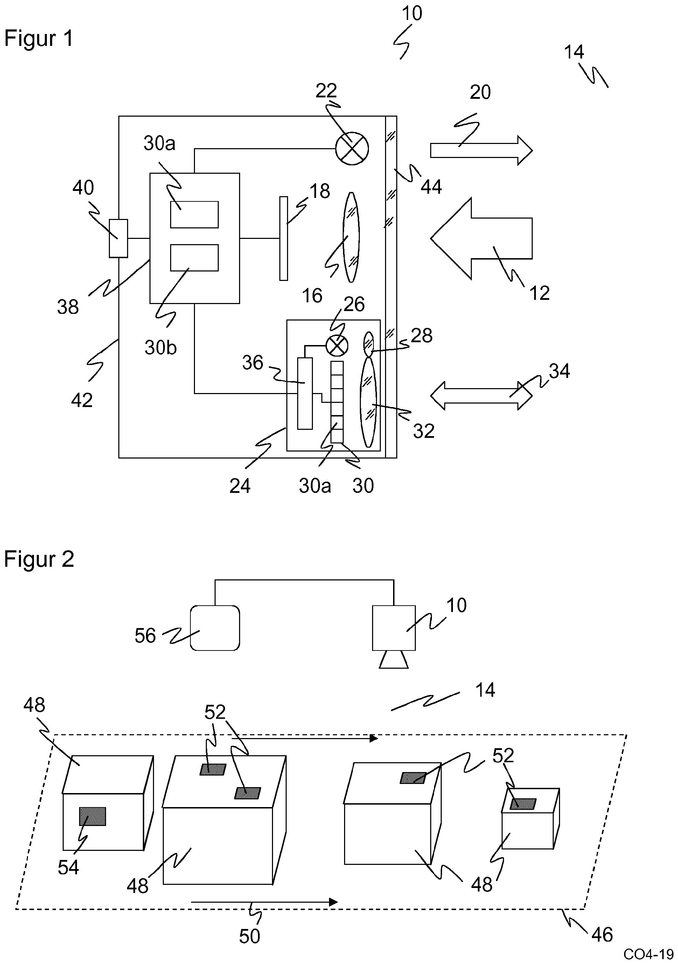

Figur 1 zeigt eine schematische Schnittdarstellung eines optoelektronischen Codelesers 10. Empfangslicht 12 aus einem Erfassungsbereich 14 trifft auf eine Empfangsoptik 16, die das Empfangslicht 12 auf einen Bildsensor 18 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Vorzugsweise ist keine Fokusverstellung und insbesondere kein Autofokussystem vorgesehen. Die Erfindung ist zwar auch mit einer Fokusverstellung anwendbar, soll jedoch eigentlich ermöglichen, bereits mit einem kostengünstigeren Fixfokussystem ausgezeichnete Leseergebnisse zu erzielen.

Um den Erfassungsbereich 14 während einer Aufnahme des Codelesers 10 mit Sendelicht 20 auszuleuchten, umfasst der Codeleser 10 eine optionale Beleuchtungseinheit 22, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 22 wie deren Farbe, Intensität und Richtung anzupassen.

Zusätzlich zu dem eigentlichen Bildsensor 18 zur Erfassung von Bilddaten weist der Codeleser 10 einen optoelektronischen Abstandssensor 24 auf, der mit einem Lichtlaufzeitverfahren (ToF, Time of Flight) Abstände zu Objekten in dem Erfassungsbereich 14 misst. Der Abstandssensor 24 umfasst einen TOF-Lichtsender 26 mit TOF-Sendeoptik 28 sowie einen TOF-Lichtempfänger 30 mit TOF-Empfangsoptik 32. Damit wird ein TOF-Lichtsignal 34 ausgesandt und wieder empfangen. Eine Lichtlaufzeitmesseinheit 36 bestimmt die Laufzeit des TOF-Lichtsignals 34 und daraus den Abstand zu einem Objekt, an dem das TOF-Lichtsignal 34 zurückgeworfen wurde. Die optoelektronische Abstandsmessung mittels Lichtlaufzeitverfahren ist bekannt und wird daher nicht im Einzelnen erläutert. Dabei gibt es auch hochintegrierte Lösungen, in denen der TOF-Lichtempfänger 30 mit der Lichtlaufzeitmesseinheit 36 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 30, der als Matrix von SPAD-Lichtempfangselementen 30a aufgebaut ist (Single-Photon Avalanche Diode). Damit sind auch lateral ortsaufgelöste Abstandsmessungen möglich, die mehrere Distanzwerte zu verschiedenen Bildbereichen liefern. Der Aufbau des Abstandssensors 24 ist rein beispielhaft, und es ist denkbar, einen Distanzwert oder mehrere Distanzwerte alternativ mit einem anderen optischen oder nicht optischen Verfahren zu messen.

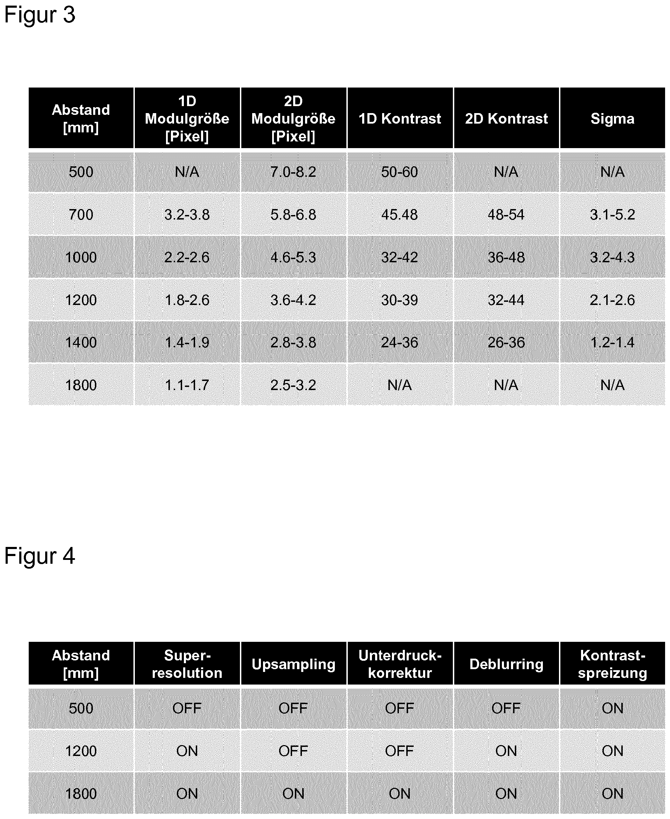

Eine Steuer- und Auswertungseinheit 38 ist mit der Beleuchtungseinheit 22, dem Bildsensor 18 und dem Abstandssensor 24 verbunden und für die Steuerungs-, Auswertungs- und sonstigen Koordinierungsaufgaben in dem Codeleser 10 zuständig. Sie umfasst einen oder mehrere Verarbeitungsbausteine, wie ein FPGA 38a und einen Mikroprozessor 38b, und wertet die Bilddaten des Bildsensors 18 aus. Dabei werden Codebereiche in den Bilddaten aufgefunden und deren Codes gelesen. Distanzwerte des Abstandssensors 24 werden verwendet, um das Decodierverfahren zu parametrieren und/oder den Decoderalgorithmus anzupassen, wie später unter Bezugnahme auf die Figuren 3 und 4 genauer beschrieben.

Über eine Schnittstelle 40 gibt der Codeleser 10 Informationen aus, wie gelesene Codes oder Bilddaten. Es ist denkbar, dass die Steuer- und Auswertungseinheit 38 nicht in dem eigentlichen Codeleser 10, sondern als eigenes Steuerungsgerät an einen oder mehrere Codeleser 10 angeschlossen wird. Dann dient die Schnittstelle 40 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 38 unabhängig von der konkreten Implementierung als Teil des Codelesers 10 aufgefasst. Der Codeleser 10 wird durch ein Gehäuse 42 geschützt, das im vorderen Bereich, wo das Empfangslicht 12 einfällt, durch eine Frontscheibe 44 abgeschlossen ist.

Figur 2 zeigt den Codeleser 10 in einer bevorzugten Anwendungssituation montiert über einem Förderband 46, welches Objekte 48, wie durch den Pfeil 50 angedeutet, durch den Erfassungsbereich 14 des Codelesers 10 fördert. Die Objekte 48 tragen an ihren Außenflächen Codebereiche 52, die von dem Codeleser 10 erfasst und ausgewertet werden. Diese Codebereiche 52 können von dem Codeleser 10 nur dann erkannt werden, wenn sie auf der Oberseite oder zumindest von oben sichtbar angebracht sind. Daher kann abweichend von der Darstellung in Figur 2 zum Lesen eines etwa seitlich oder unten angebrachten Codes 54 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Decodieren von Codes, so dass dieses Beispiel nicht einschränkend verstanden werden darf.

In Figur 1 ist ein Codeleser 10 mit integriertem Abstandssensor 24 dargestellt. Alternativ oder zusätzlich kann ein Geometrieerfassungssensor 56, beispielsweise ein Laserscanner, ein Profil der Objekte 48 erfassen und dem Codeleser 10 entsprechende Distanzwerte zu den Objekten 48 oder schon den Codebereichen 52 übergeben.

Es kommt für die Erfindung auch nicht auf das konkrete Bildgebungsverfahren an, so dass der Codeleser 10 alternativ nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Bildsensor 18 ein einfacher Lichtempfänger wie eine Photodiode ausreicht. Es kann direkt versucht werden, aus einer Bildzeile den Code zu lesen, oder die Steuer- und Auswertungseinheit 38 fügt die im Laufe einer Relativbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Bewegungsrichtung als auch quer dazu möglich ist. Die mehreren Aufnahmen werden nacheinander und/oder von mehreren Codelesern 10 aufgenommen, die beispielsweise mit ihren Erfassungsbereichen 14 nur gemeinsam die gesamte Breite des Förderbands 46 abdecken, wobei jeder Codeleser 10 gleichsam nur eine Kachel des Gesamtbildes aufnimmt und die Kacheln durch Bildverarbeitung (Stitching) zusammengefügt werden. Auch ein nur fragmenthaftes Decodieren innerhalb einzelner Kacheln mit anschließendem Zusammenfügen der Codefragmente ist denkbar.

Wie einleitend schon erwähnt, ist die Leserate eine der wichtigsten Kenngrößen des Codelesers 10. Nun gibt es verschiedene Ursachen, warum ein Decoderverfahren scheitert (NoRead). Dabei ist zunächst anzumerken, dass die Steuer- und Auswertungseinheit 38 nicht genug Rechenkapazitäten beziehungsweise nicht genug Zeit zwischen den erfassten Objekten 48 hat, um eine Vielzahl von Parametern und Vorverarbeitungsschritten durchzuprobieren. Ein Code wäre also oftmals mit den vorhandenen Algorithmusbausteinen und Bilddaten lesbar, jedoch nicht unter diesen praktischen Einschränkungen der Anwendung.

Bei zu geringem Kontrast werden die Codebereiche 52 im Bild nicht verlässlich gefunden. Abhilfe könnte eine intelligente Kontrastspreizung schaffen. Dies wäre aber nicht für alle Objekthöhen vorteilhaft, denn im Gegenteil könnte durch die mitgespreizten Rauschanteile ein an sich lesbarer Code dann nicht mehr gelesen werden.

Die Modulgröße, vorzugsweise angegeben in Pixeln pro Codemodul, kann zu klein zum Decodieren sein. Der Aufwand, generell für alle Codebereiche 52 und Objekthöhen ein Upsampling oder einen Superresolution-Algorithmus anzuwenden, ist aber wegen des Laufzeitzuwachses nicht leistbar. Dadurch gibt es an sich vermeidbare Decoderabbrüche und nicht gelesene Codes.

Gerade bei Fixfokussystemen sind womöglich Codebereiche 52 unscharf aufgenommen. Erneut wäre der Aufwand, Codebereiche 52 algorithmisch aufzubereiten, beispielsweise durch ein iteratives Deblurring, nicht generell und für alle Objekthöhen möglich.

Codebereiche 52 können überstrahlt sein, so dass Unterdruck-Effekte entfernt werden müssen. Das ist nicht unbedingt hilfreich, wenn es keinen Unterdruckeffekt gibt, und wiederum zu aufwändig für eine bedingungslose, ständige Anwendung.

Die Suchkontraste, mit denen Codebereiche 52 in den Bilddaten lokalisiert werden, müssen sensibel eingestellt werden, um auch Codebereiche 52 auf flachen Objekten 48 in großem Abstand zu finden. Nahe der idealen Fokuslage werden dann aber auch Störkontraste als Codebereich 52 erkannt (false positive), und somit müssen insgesamt zu viele Codebereiche 52 durchgerechnet werden.

Wie anhand dieser Beispiele illustriert, kann das Decodierverfahren erheblich verbessert und beschleunigt werden, wenn eine Parametrierung und Auswahl von Decoderbausteinen oder Zusatzalgorithmen von dem konkreten Objektabstand abhängig gemacht wird. Deshalb nimmt die Steuer- und Auswertungseinheit 38 eine dynamische Autoparametrierung und/oder Auswahl von Zusatzalgorithmen in Abhängigkeit von den Distanzwerten des Abstandssensors 24 und/oder des Geometrieerfassungssensors 56 vor.

Figur 3 zeigt eine Parametertabelle, die verschiedenen Abständen oder Distanzwerten eines Codebereiche 52 passende Parameter zuordnet. Die konkreten Zahlenwerte sind rein beispielhaft zu verstehen. Es ist vorteilhaft, wenn die Distanzwerte lateral ortsaufgelöst vorliegen und tatsächlich dem Abstand zum jeweiligen Codebereich 52 entsprechen. Ein gröberer Distanzwert, etwa ein einziger Distanzwert zum Objekt 48, leistet jedoch ebenfalls einen großen Anteil. Die Auflösung in Abstandsrichtung kann feiner oder grober sein, die Parametertabelle demnach mehr oder weniger Zeilen aufweisen als in Figur 3. Fehlende Zeilen können durch Interpolation oder Extrapolation ergänzt werden.

Die Steuer- und Auswertungseinheit 38 kann aus der Parametertabelle zu dem aktuellen Distanzwert des bearbeiteten Codebereichs 52 die passenden Parameter für das Decodierverfahren ablesen und so ihren Suchraum einschränken. Als Parameter kommen insbesondere die Modulgröße, der Kontrast und die als Sigma bezeichnete Unschärfe in Betracht. Eine Differenzierung in 1D-Codes und 2D-Codes ist denkbar. Dem Decodierverfahren ist durch die passenden Parameter eine Unterscheidung in helle und dunkle Bereiche des Codes sowie die Erkennung, Lokalisierung und Vermessung von Codemodulen erheblich erleichtert. Die komplexen heutzutage angewandten Decodierverfahren kennen noch weitere Parameter, die ebenfalls in die Parametertabelle eingetragen werden können. Sinnvoll ist das nur für solche Parameter, die eine signifikante Abhängigkeit vom Distanzwert zeigen.

Die Werte der Parametertabelle können prinzipiell durch einen Fachmann vorbesetzt werden. Vorzugsweise wird die Parametertabelle jedoch im Betrieb aufgebaut und verbessert, und zwar anhand von Codebereichen 52, in denen erfolgreich ein Code gelesen wurde (GoodRead). Dann werden nämlich die Parameter gemessen, mit denen das gelungen ist, und in die Parametertabelle eingetragen. Sofern schon ein Eintrag besteht, wird dieser vorzugsweise nicht einfach überschrieben, sondern angepasst, etwa durch Mittelung oder Veränderung von Bereichsgrenzen. So liegt die Modulgröße nach erfolgreicher Lesung subpixelgenau vor Der Kontrast lässt sich als Mittelwert der als hell beziehungsweise dunkel klassifizierten Codebereiche angeben, und der Unschärfegrad Sigma kann an den identifizierten Kantenübergängen abgeschätzt werden.

Gerade nach kurzer Betriebszeit kann es vorkommen, dass für ein Tupel Distanzwert/Parameter noch kein Wert vorliegt, was mit N/A gekennzeichnet ist. Dann wird ein Parameter für den nächstliegenden Distanzwert verwendet oder ein Parameter aus den vorhandenen Parametern für andere Distanzwerte inter- beziehungsweise extrapoliert.

Somit werden die Zuordnungen der Parametertabelle im Betrieb eingelernt und/oder weiter verbessert. Das Decodierverfahren parametriert sich dynamisch in Abhängigkeit vom aktuellen Distanzwert um, lernt anhand der erfolgreichen Leseversuche dazu und arbeitet mit dem besten applikatorischen Vorwissen zur Segmentierung und Decodierung für die aktuelle Objekthöhe.

Es ist denkbar, eine jeweilige Aktualisierung der Parametertabelle nochmals zu verifizieren. Dazu werden bereits gelesene Codes aus den Bilddaten mit dem neu in der Parametertabelle zu speichernden Parametersatz nochmals gelesen. Gehen dabei Codes verloren, so sollte der Suchraum wieder vergrößert werden, die Aktualisierung also zumindest teilweise zurückgenommen oder neu mit den älteren Einträgen verrechnet werden. Solche Verifizierungen können in Leerlaufphasen des Codelesers 10 zwischen zwei nacheinander in den Erfassungsbereich 14 geförderten Objekten 48 durchgeführt werden. Typischerweise erhält der Codeleser 10 ein Signal, wenn ein neues Objekt 48 in den Erfassungsbereich 14 eintritt und diesen wieder verlässt (Gate On / OFF). Somit ist der Beginn einer solchen Leerlaufphase bekannt, und sobald ein neues Objekt 48 zu verarbeiten ist, werden die testweisen Leseversuche abgebrochen.

Es ist auch denkbar, eine Testdecoderinstanz für solche Aufgaben vorzusehen. Der Testdecoder ist beispielsweise auf einem eigenen Prozessorkern, als eigener Thread oder extern in einer Cloud oder dergleichen implementiert und stellt vorzugsweise seine Rechenkapazitäten dem eigentlichen Decodierverfahren zur Verfügung, wenn sie dort gebraucht werden. Der Testdecoder kann bei Bedarf auf Zwischenverarbeitungsstufen des eigentlichen Decodierverfahrens zugreifen. Das Verifizieren ist nicht zeitkritisch, da solange einfach die vorhandene Parametertabelle weiterbenutzt und noch nicht aktualisiert werden kann. Es ist auch vorstellbar, Leerlaufphasen beziehungsweise einen Testdecoder dafür zu verwenden, den Parameterraum auf vorhandenen Bilddaten und bereits verarbeiteten Codebereichen 52 mit neuen Parameterkombinationen auszutesten, sei es mit Lesen (GoodRead) oder nicht (NoRead), um die Parametertabelle weiter zu verbessern.

Figur 4 zeigt eine Zusatzalgorithmustabelle, die verschiedenen Abständen oder Distanzwerten eines Codebereiche 52 anzuwendende (ON) und nicht anzuwendende (OFF) Zusatzalgorithmen zuordnet. Dadurch wird jeweils eine passende Auswahl an Zusatzalgorithmen verwendet. Die Zusatzalgorithmustabelle ist rein beispielhaft zu verstehen und kann mehr oder weniger Zeilen sowie andere Zuordnungen von anzuwendenden oder nicht anzuwendenden Zusatzalgorithmen enthalten. Die abstandsabhängige Auswahl von Zusatzalgorithmen gemäß Figur 4 kann mit einer abstandsabhängigen Parametrierung gemäß Figur 3 kombiniert werden oder nicht.

Zusatzalgorithmen sind kein Messwert und können daher nicht direkt aus erfolgreichen Leseversuchen bestimmt werden. Es kann lediglich festgestellt werden, dass bestimmte Kombinationen von Zusatzalgorithmen ein Codelesen ermöglicht haben und andere nicht, wobei aber weder klar ist, ob die Kombination im einen Fall optimal war noch ob es im anderen Fall eine Kombination gegeben hätte, die das Lesen doch noch ermöglicht hätte.

Wiederum besteht eine Alternative darin, die Zusatzalgorithmustabelle mit Fachwissen vorzubesetzen. Dieses Fachwissen kann durch Simulation oder Auswerten früherer Bilddaten gewonnen werden, die aus derselben oder einer anderen Anwendungssituation stammen. Vorzugsweise wird aber auch die Zusatzalgorithmustabelle automatisch erzeugt und erweitert.

Dazu werden in Leerlaufzeiten oder in einem Testdecoder, wie oben beschrieben, verschiedene Kombinationen von Zusatzalgorithmen durchprobiert. Im Laufe der Zeit bilden sich in der Zusatzalgorithmustabelle immer besser optimierte Kombinationen für zugehörige Distanzwerte heraus, mit denen die Leserate gesteigert beziehungsweise das Decodierverfahren beschleunigt wird. Die Kombinationen von Zusatzalgorithmen werden vorzugsweise nicht zufällig durchprobiert, sondern variieren erfolgreiche frühere Leseversuche für gleiche oder ähnliche Distanzwerte. Übrigens ist denkbar, in der Zusatzalgorithmustabelle für einen Distanzwert mehrere Kombinationen zu speichern, die das Decodierverfahren im eigentlichen Betrieb gegebenenfalls nacheinander probiert (Retry). Eine Grundkonfiguration kann immer sein, im ersten Leseversuch grundsätzlich ohne Zusatzalgorithmus auszukommen.

Wenn es durch Anwendung einer bestimmten Kombination von Zusatzalgorithmen gelungen ist, einen Code zu lesen, insbesondere einen, der vorher nicht gelesen werden konnte, so ist denkbar, zugleich auch die Parametertabelle mit den im nun erfolgreichen Leseversuch gemessenen Werten zu aktualisieren.

Die Zusatzalgorithmustabelle der Figur 4 enthält in ihren Spalten mehrere Beispiele für Zusatzalgorithmen. Durch Upsampling oder Downsampling wird die Auflösung in Pixeln pro Längeneinheit verbessert oder umgekehrt, wenn die originäre Auflösung gar nicht erforderlich ist, auch zum Gewinnen von Laufzeitvorteilen herabgesetzt. Das Upsampling und Downsampling betrifft vor allem 2D-Codes. Superresolution ist ein Verfahren, dass aus mehreren Aufnahmen eine subpixelgenaue Auflösung berechnet und sich vor allem, aber nicht ausschließlich für Barcodes eignet. Durch lokale Kontrasterhöhung werden die Kanten zwischen den Modulen präziser gefunden. Eine allgemeine Kontrastspreizung verbessert vor allem das anfängliche Auffinden von Codebereichen 52 in den Bilddaten. Für ein intelligentes Deblurring sind beispielsweise iterative Verfahren wie Lucy-Richardson-Deconvolution denkbar. Eine Unterdruckkorrektur betrifft eigentlich zu schwach gedruckte Codes, aber die Effekte einer Überbelichtung sind vergleichbar und davon deshalb auch korrigierbar. Alle diese Zusatzalgorithmen, deren Aufzählung auch nicht abschließend sein soll, sind an sich bekannt. Es geht erfindungsgemäß darum, distanzabhängig die passenden anzuwendenden Zusatzalgorithmen zu finden.

Es sollen zur Illustration noch einige konkretere Beispiele diskutiert werden. Unterdruckeffekte durch Überbelichtung treten vor allem bei kleinen Distanzwerten auf. Ein Upsampling oder ein Superresolution-Verfahren sind besonders bei größeren Distanzwerten nützlich, um den Code noch lesen zu können. Das ist generell das wichtigste Ziel. Downsampling wird die Leserate eher nicht verbessern, sondern ist bei kurzen Distanzwerten möglich, um die Arbeitsgeschwindigkeit zu steigern. Bevor also ein Downsampling eingesetzt wird, sollte durch den Testdecoder oder in einer Leerlaufphase verifiziert sein, dass auf diese Weise keine Codes verlorengehen.

Es gibt folglich Erwartungen daran, welche Zusatzalgorithmen eher für nahe oder weite Abstände geeignet sind. Das ist aber nur im Sinne einer möglichen Vorbesetzung der Zusatzalgorithmustabelle von Interesse. Ansonsten findet das System selbständig die passenden Zuordnungen und Kombinationen.

Einige der Maßnahmen, wie Superresolution oder Deblurring, lassen sich unter der Überschrift zusammenfassen, den Tiefenschärfenbereich insbesondere eines Fixfokussystems durch Softwaremaßnahmen zu erweitern und dabei Laufzeitverluste zu begrenzen.

Bei großen Distanzwerten sind viele Bildbereiche sehr dunkel. Dann kann eine Kontrastspreizung angewandt beziehungsweise zuvor mit dem Testdecoder ausgetestet werden. Damit der Testdecoder die Bilddaten nicht verändert, wird vorzugsweise die Kontrastspreizung über eine zwischengeschaltete Nachschlagtabelle von Grauwerten realisiert.

Bei iterativen Zusatzalgorithmen wie dem Deblurring ist es vorteilhaft, die Anzahl der notwendigen Iterationen zu kennen. Je größer der in Figur 3 mit Sigma bezeichnete Unschärfegrad, desto mehr Iterationen sind in der Regel für ein ausreichendes Nachschärfen erforderlich. Zu viele Iterationen verstärken jedoch den Rauschanteil, so dass die Bildqualität dann wieder sinkt. Da der Unschärfegrad vom Distanzwert abhängig ist, kann die notwendige Anzahl Iterationen ebenfalls eingelernt und abstandsabhängig parametriert werden.

Über die obigen Beispiele hinaus kann der Distanzwert auch als eigenes Kriterium genutzt werden, dass ein Bildbereich von vorneherein keinen Code trägt. Das gilt insbesondere dann, wenn der Distanzwert der Höhe des Förderbandes 46 entspricht. Dazu sollte der Codeleser 10 bezüglich seiner Montagehöhe kalibriert sein, und die Distanzwerte sollten präzise genug gemessen werden, um keine flachen Objekte 48 zu übersehen. Besonders vorteilhaft ist das für einen Schalensorter, dessen Schalen eine Holzstruktur aufweisen, die mit Codebereichen 52 verwechselt werden könnte. Unter den genannten Bedingungen wird nun bei einem Distanzwert, welcher dem Förderband 46 beziehungsweise einer leeren Schalte entspricht, gar kein Leseversuch unternommen, um die Decodierung zu beschleunigen.

Bisher wurden Zusatzalgorithmen beschrieben, die vorzugsweise auf den bereits segmentierten Codebereichen 52 angewandt werden. Manche Zusatzalgorithmen zur Vorverarbeitung können aber auch schon auf den Bilddaten vor der Segmentierung angewandt werden. Das geschieht vorzugsweise in einem Verarbeitungsbaustein, der für die schnelle Anwendung vergleichsweise einfacher Schritte auf eine große Datenmenge geeignet ist, wie in FPGA (Field-Programmable Gate Array). Das eigentliche Decodierverfahren ist vorzugsweise eher in einem flexiblen Baustein wie einem Mikroprozessor implementiert, der durch die Vorverarbeitung auf dem FPGA entlastet wird.

Solche vorab angewandten Zusatzalgorithmen sollten vorzugsweise in gleicher Weise distanzabhängig gefunden, verifiziert und angewandt werden, wie dies zuvor beschrieben wurde. Beispiele für in diesem Zusammenhang geeignete Zusatzalgorithmen sind ein Upsampling oder Downsampling sowie eine Kontrastspreizung.

Beispielsweise hat der Testdecoder mehrfach verifiziert, dass ab einem gewissen Abstand ein Upsampling stattfinden muss. Nach dieser Verifikation bekommt nun das FPGA die Anweisung, bei Distanzwerten ab diesem Abstand das Originalbild entsprechend heraufzuinterpolieren und gegebenenfalls auch noch nachzuschärfen. Im umgekehrten Fall kann auch ein Downsampling beziehungsweise Binning verifiziert sein. Der Testdecoder hat also festgestellt, dass bis zu einem gewissen Abstand die Codes ohne Verringerung der Leserate auch mit weniger hoch aufgelösten Bilddaten gelesen werden. Bei Unterschreitung dieses Abstands werden nun im FPGA die Eingangsbilder heruntergerechnet, um die Laufzeiten des Decodierverfahrens zu verbessern. Voraussetzung hierfür ist, dass der Testdecoder die Berechnungen des FPGA mit ausreichender Übereinstimmung nachbilden kann, damit die Verifikation auch trägt.

Ein FPGA bietet die Möglichkeit, eine abstandsabhängige Kontrastspreizung besonders einfach zu implementieren. Denn meist sind weisen Eingangsdaten des Bildsensors 18 und damit des FPGAs eine höhere Bittiefe auf, beispielsweise 12 Bit oder 16 Bit, als das eigentliche Decodierverfahren, das typischerweise auf 8-Bit-Grauwerten arbeitet. Statt nun die höhere Bittiefe im FPGA zu reskalieren, können je nach Distanzwert 8 höher- oder niederwertigere Bits ausgeschnitten werden, was einer impliziten einfachen Kontrastspreizung entspricht. Bei großer Distanz mit dunklen Bildern werden nämlich die obersten Bits keine Information mehr tragen, so dass die unteren Bits selektiert werden. Entsprechend sind bei kurzer Distanz mit hellen Bildern die unteren Bits zwar nicht ohne Information, aber mit dem höchsten Rauschanteil weniger entscheidend. Um das Rauschen zu unterdrücken, sind auch weitere FPGA-Operationen denkbar, wie eine Medianfilterung oder sonstige Glättung. Gerade bei kleinen Modulgrößen ist eine solche Filterung kontraproduktiv, so dass auch die Anwendung solcher Filter vorzugsweise zunächst durch den Testdecoder verifiziert wird.

## Patentansprüche

1. Codeleser (10) zum Lesen von optischen Codes (52), der einen Bildsensor (18) zum Erfassen von Bilddaten mit dem Code (52) und eine Steuer- und Auswertungseinheit (38) aufweist, die dafür ausgebildet ist, den Code (52) mit mindestens einem Decodierverfahren zu lesen, wobei die Steuer- und Auswertungseinheit (38) mit einem Abstandssensor (24, 56) verbunden ist, der einen Distanzwert für den Abstand des Codes (52) bestimmt,
**dadurch gekennzeichnet,**
**dass** die Steuer- und Auswertungseinheit (38) weiterhin dafür ausgebildet ist, mindestens einen der Parameter des Decodierverfahrens in Abhängigkeit von dem Distanzwert zu setzen, wobei die Parameter Modulgröße, Kontrast oder Unschärfe der Kanten sind, und/oder mindestens einen Zusatzalgorithmus des Decodierverfahrens, der auf einen segmentierten Codebereich (52) oder auf Bilddaten vor der Segmentierung angewandt wird, in Abhängigkeit von dem Distanzwert durchzuführen oder nicht durchzuführen.

2. Codeleser (10) nach Anspruch 1,
wobei der Abstandssensor (24) ein in den Codeleser (10) integrierter optoelektronischer Abstandssensor insbesondere nach einem Lichtlaufzeitverfahren ist.

3. Codeleser (10) nach einem der vorhergehenden Ansprüche,
wobei die Steuer- und Auswertungseinheit (38) eine Parametertabelle mit Distanzwerten und zugehörigen Parametern hält, die anhand von gemessenen Werten der Parameter bei erfolgreichem Lesen von Codes (52) gebildet und/oder aktualisiert wird.

4. Codeleser (10) nach Anspruch 3,
wobei die Steuer- und Auswertungseinheit (38) dafür ausgebildet ist, zum Verbessern der Parametertabelle zu versuchen, einen Code (52) mit unterschiedlichen Parametern zu lesen.

5. Codeleser (10) nach einem der vorhergehenden Ansprüche,
wobei der Zusatzalgorithmus mindestens einer der folgenden ist:
Downsampling, Upsampling, Superresolution, lokale Kontrasterhöhung, Deblurring, Unterdruckkorrektur.

6. Codeleser (10) nach einem der vorhergehenden Ansprüche,
wobei die Steuer- und Auswertungseinheit (38) eine Zusatzalgorithmustabelle mit Distanzwerten und zugehörigen Zusatzalgorithmen aufweist, die anhand von mit einem jeweiligen Zusatzalgorithmus gelesenen Codes (52) gebildet und/oder aktualisiert wird.

7. Codeleser (10) nach Anspruch 6,
wobei die Steuer- und Auswertungseinheit (38) dafür ausgebildet ist, zum Verbessern der Zusatzalgorithmustabelle verschiedene Kombinationen von Zusatzalgorithmen auszuprobieren, insbesondere in Codebereichen, in denen bisher kein Code (52) gelesen werden konnte.

8. Codeleser (10) nach einem der vorhergehenden Ansprüche,
wobei die Steuer- und Auswertungseinheit (38) dafür ausgebildet ist, Parameter und/oder Zusatzalgorithmen in Phasen auszuprobieren, in denen keine weiteren Codes (52) gelesen werden.

9. Codeleser (10) nach einem der vorhergehenden Ansprüche,
wobei die Steuer- und Auswertungseinheit (38) einen Testdecoder zum Ausprobieren von Parametern und/oder Zusatzalgorithmen aufweist.

10. Codeleser (10) nach einem der vorhergehenden Ansprüche,
wobei die Steuer- und Auswertungseinheit (38) dafür ausgebildet ist, Parameter und/oder Zusatzalgorithmus für das Decodieren bereits segmentierter Codebereiche (52) auszuwählen.

11. Codeleser (10) nach einem der vorhergehenden Ansprüche,
wobei die Steuer- und Auswertungseinheit (38) dafür ausgebildet ist, Parameter und/oder Zusatzalgorithmus für eine Vorverarbeitung der Bilddaten unabhängig von Codebereichen (52) auszuwählen.

12. Codeleser (10) nach Anspruch 11,
wobei die Vorverarbeitung in einem FPGA (38a) implementiert ist.

13. Codeleser (10) nach Anspruch 11 oder 12,
wobei die Vorverarbeitung ein Upsampling, ein Downsampling und/oder eine Kontrastspreizung umfasst, wobei insbesondere die Kontrastspreizung eine Auswahl eines höherwertigen oder niederwertigen Bitbereichs der Bilddaten je nach Distanzwert aufweist.

14. Verfahren zum Lesen von optischen Codes (52), bei dem Bilddaten mit dem Code (52) erfasst werden und der Code (52) mit mindestens einem Decodierverfahren gelesen wird, wobei außerdem ein Distanzwert für den Abstand des Codes (52) bestimmt wird,
**dadurch gekennzeichnet,**
**dass** mindestens einer der Parameter des Decodierverfahrens in Abhängigkeit von dem Distanzwert gesetzt wird, wobei die Parameter Modulgröße, Kontrast oder Unschärfe der Kanten sind, und/oder mindestens ein Zusatzalgorithmus des Decodierverfahrens, der auf einen segmentierten Codebereich (52) oder auf Bilddaten vor der Segmentierung angewandt wird, in Abhängigkeit von dem Distanzwert durchgeführt wird oder nicht durchgeführt wird.

## Claims

1. A code reader (10) for reading optical codes (52), comprising an image sensor (18) for acquiring image data with the code (52), and a control and evaluation unit (38) configured to read the code (52) with at least one decoding method, wherein the control and evaluation unit (38) is connected to a distance sensor (24, 56) that determines a distance value for the distance of the code (52), **characterized in that** the control and evaluation unit (38) is further configured to set at least one of the parameters of the decoding method in dependence on the distance value, said parameters being module size, contrast or blurring of the edges, and/or to perform or not to perform at least one additional algorithm of the decoding method applied to a segmented code area (52) or to image data before segmentation in dependence on the distance value.

2. The code reader (10) according to claim 1,
wherein the distance sensor (24) is an optoelectronic distance sensor integrated in the code reader (10), in particular according to a time-of-flight method.

3. The code reader (10) according to any of the preceding claims,
wherein the control and evaluation unit (38) holds a parameter table with distance values and associated parameters, which is formed and/or updated on the basis of measured values of the parameters when codes (52) are successfully read.

4. The code reader (10) according to claim 3,
wherein the control and evaluation unit (38) is configured to attempt to read a code (52) with different parameters for improving the parameter table.

5. The code reader (10) according to any of the preceding claims,
wherein the additional algorithm is at least one of the following: downsampling, upsampling, superresolution, local contrast increase, deblurring, weak print correction.

6. The code reader (10) according to any of the preceding claims,
wherein the control and evaluation unit (38) comprises an additional algorithm table with distance values and associated additional algorithms, which is formed and/or updated on the basis of codes (52) read with a respective additional algorithm.

7. The code reader (10) according to claim 6,
wherein the control and evaluation unit (38) is configured to try out different combinations of additional algorithms for improving the additional algorithm table, in particular in code areas in which no code (52) could be read so far.

8. The code reader (10) according to any of the preceding claims,
wherein the control and evaluation unit (38) is configured to try out parameters and/or additional algorithms in phases in which no further codes (52) are read.

9. The code reader (10) according to any of the preceding claims,
wherein the control and evaluation unit (38) comprises a test decoder for trying out parameters and/or additional algorithms.

10. The code reader (10) according to any of the preceding claims,
wherein the control and evaluation unit (38) is configured to select parameters and/or additional algorithm for decoding already segmented code areas (52).

11. The code reader (10) according to any of the preceding claims,
wherein the control and evaluation unit (38) is configured to select parameters and/or additional algorithm for a preprocessing of the image data independently of code areas (52).

12. The code reader (10) according to claim 11,
wherein the preprocessing is implemented in an FPGA (38a).

13. The code reader (10) according to claim 11 or 12,
wherein the preprocessing comprises an upsampling, a downsampling and/or a contrast spreading, wherein in particular the contrast spreading comprises a selection of a more significant or less significant bit area of the image data depending on the distance value.

14. A method for reading optical codes (52), wherein image data is acquired with the code (52) and the code (52) is read with at least one decoding method, wherein a distance value for the distance of the code (52) is also determined, **characterized in that** at least one of the parameters of the decoding method is set as a function of the distance value, said parameters being module size, contrast or blurring of the edges, and/or at least one additional algorithm of the decoding method applied to a segmented code area (52) or to image data before segmentation is performed or not performed in dependence on the distance value.

## Revendications

1. Lecteur de code (10) pour lire des codes optiques (52), comprenant un capteur d'images (18) pour saisir des données d'image avec le code (52) et une unité de commande et d'évaluation (38) réalisée pour lire le code (52) selon au moins un procédé de décodage, l'unité de commande et d'évaluation (38) étant connectée à un capteur de distance (24, 56) qui détermine une valeur de distance pour la distance du code (52),
**caractérisé en ce que**
l'unité de commande et d'évaluation (38) est en outre réalisée pour définir l'un au moins des paramètres du procédé de décodage en fonction de la valeur de distance, les paramètres étant la taille de module, le contraste ou le flou des bords, et/ou pour mettre en oeuvre ou ne pas mettre en oeuvre, en fonction de la valeur de distance, au moins un algorithme supplémentaire du procédé de décodage, appliqué à une zone de code segmentée (52) ou à des données d'image avant la segmentation.

2. Lecteur de code (10) selon la revendication 1,
dans lequel le capteur de distance (24) est un capteur de distance optoélectronique fonctionnant en particulier selon le principe du temps de vol et intégré dans le lecteur de code (10).

3. Lecteur de code (10) selon l'une des revendications précédentes,
dans lequel l'unité de commande et d'évaluation (38) détient une table de paramètres avec des valeurs de distance et des paramètres associés, qui est établie et/ou mise à jour sur la base de valeurs mesurées des paramètres lors de la lecture réussie des codes (52).

4. Lecteur de code (10) selon la revendication 3,
dans lequel l'unité de commande et d'évaluation (38) est réalisée pour tenter de lire un code (52) avec des paramètres différents pour améliorer la table de paramètres.

5. Lecteur de code (10) selon l'une des revendications précédentes, dans lequel l'algorithme supplémentaire est au moins l'un des suivants :
sous-échantillonnage, sur-échantillonnage, super-résolution, augmentation locale du contraste, défloutage, correction de sous-impression.

6. Lecteur de code (10) selon l'une des revendications précédentes, dans lequel l'unité de commande et d'évaluation (38) inclut une table d'algorithmes supplémentaires avec des valeurs de distance et des algorithmes supplémentaires associés, qui est établie et/ou mise à jour sur la base de codes (52) lus avec un algorithme supplémentaire respectif.

7. Lecteur de code (10) selon la revendication 6,
dans lequel l'unité de commande et d'évaluation (38) est réalisée pour essayer différentes combinaisons d'algorithmes supplémentaires afin d'améliorer la table d'algorithmes supplémentaires, en particulier dans les zones de code dans lesquelles aucun code (52) n'a pu être lu jusqu'à présent.

8. Lecteur de code (10) selon l'une des revendications précédentes, dans lequel l'unité de commande et d'évaluation (38) est réalisée pour essayer des paramètres et/ou des algorithmes supplémentaires dans les phases dans lesquelles aucun autre code (52) n'est lu.

9. Lecteur de code (10) selon l'une des revendications précédentes, dans lequel l'unité de commande et d'évaluation (38) comprend un décodeur de test pour essayer des paramètres et/ou des algorithmes supplémentaires.

10. Lecteur de code (10) selon l'une des revendications précédentes, dans lequel l'unité de commande et d'évaluation (38) est réalisée pour sélectionner des paramètres et/ou un algorithme supplémentaire pour le décodage des zones de code (52) déjà segmentées.

11. Lecteur de code (10) selon l'une des revendications précédentes, dans lequel l'unité de commande et d'évaluation (38) est réalisée pour sélectionner des paramètres et/ou un algorithme supplémentaire pour un prétraitement des données d'image indépendamment des zones de code (52).

12. Lecteur de code (10) selon la revendication 11,
dans lequel le prétraitement est mis en oeuvre dans un FPGA (38a).

13. Lecteur de code (10) selon la revendication 11 ou 12,
dans lequel le prétraitement comprend un sur-échantillonnage, un sous-échantillonnage et/ou un étalement de contraste, et
en particulier l'étalement de contraste comprend la sélection d'une plage de bits plus significative ou moins significative des données d'image en fonction de la valeur de distance.

14. Procédé de lecture de codes optiques (52), dans lequel des données d'image avec le code (52) sont saisies, et le code (52) est lu avec au moins un procédé de décodage, et en outre une valeur de distance pour la distance du code (52) est déterminée,
**caractérisé en ce que**
l'un au moins des paramètres du procédé de décodage est défini en fonction de la valeur de distance, les paramètres étant la taille de module, le contraste ou le flou des bords, et/ou au moins un algorithme supplémentaire du procédé de décodage, appliqué à une zone de code segmentée (52) ou à des données d'image avant la segmentation, est mis en œuvre ou n'est pas mis en œuvre en fonction de la valeur de distance.
